# EUROPEAN PATENT APPLICATION

(11) **EP 1 411 424 A2**
(43) Date of publication of application: **21.04.2004**
(21) Application number: 03255616.9
(22) Date of filing: 09.09.2003
(51) Int. Cl.: G06F 3/033

(54) **Method and apparatus for synchronizing sensory stimuli with user interface operations**

(30) Priority: 15.10.2002 US 272040
(71) Applicant: Sun Microsystems, Inc., Santa Clara, California 95054 (US)
(72) Inventor: Kawahara, Hideya, Mountain View CA 94040 (US)
(74) Representative: Davies, Simon Robert

(57) **Abstract**

A system is provided that facilitates synchronizing sensory stimuli with operations associated with a user interface (UI) of a computer system. Upon receiving a sensory stimulus, the system analyzes the sensory stimulus to determine a pattern of events within the sensory stimulus. When a pattern of events has been determined, the system synchronizes a secondary sensory stimulus generated by the UI with the pattern of events. Note that this pattern of events can include, but is not limited to, a beat or a rhythm of an audio signal, mouse movements, window operations, and key clicks.

## Description

### Field of the Invention

The present invention relates to User Interfaces (UIs) for computer systems. More specifically, the present invention relates to a method and an apparatus that facilitates synchronizing sensory stimuli with operations associated with a UI.

### Background of the Invention

When presented with various forms of sensory stimuli, such as music and lighting effects, humans typically respond more favorably when those sensory stimuli are synchronized with each other, as well as with the environment they are presented in. For example, in a typical dance club, lighting and video effects are synchronized with the beat of the music to make for a more enjoyable experience. In movies, background music is tailored to fit the scene as well as key events or movement within the scene. Video games provide another great example where sensory stimuli and the environment are synchronized. In many video games, actions such as being hit by an enemy cause the game controller to vibrate. In the above examples, synchronization can apply to anything from timing of visual and audio effects, tempo, atmosphere, and choice of audio effects or music.

Although this kind of synchronization is commonly used in the entertainment industry, it has merely been an after-thought in designing User Interfaces (UIs) for computer systems. This is due in part to the fact that until recently, computer systems have not possessed the resources to handle such synchronization.

Moreover, the complexity involved in providing these resources is enormous. Programs to perform the synchronization either have to be part of the UI itself, or there has to be some method for programming to specific events in the UI, which presently cannot be manipulated through traditional Application Programming Interfaces (APIs) for UIs. Also note that new input/output devices such as vibrating mice and vibrating game controllers are presently not supported by existing UIs.

Hence, what is needed is a method and an apparatus that facilitates synchronizing sensory stimuli with operations associated with a UI.

### Summary of the Invention

Accordingly, one embodiment of the present invention provides a system that facilitates synchronizing sensory stimuli with operations associated with a user interface (UI) of a computer system. Upon receiving a sensory stimulus, the system analyzes the sensory stimulus to determine a pattern of events within the sensory stimulus. When a pattern of events has been determined, the system synchronizes a secondary sensory stimulus generated by the UI with the pattern of events. Note that this pattern of events can include, but is not limited to, a beat or a rhythm of an audio signal, mouse movements, window operations, and key clicks.

In one embodiment, the sensory stimulus is an audio signal. The audio signal may be received from a microphone attached to the computer system.

In one embodiment, the sensory stimulus includes a video signal. Typically, the video signal includes window operations.

In one embodiment, prior to synchronizing the secondary sensory stimulus, the system analyzes activities of a user and uses the results of this analysis in synchronizing the secondary sensory stimulus. For example, the activities of the user can include, but are not limited to, mouse movements, mouse clicks and key clicks.

In one embodiment, receiving the sensory stimulus involves determining what program the user is using, while in another embodiment, receiving the sensory stimulus involves determining a typing rate of the user.

In one embodiment, the system considers user preferences when synchronizing the secondary sensory stimulus. The secondary sensory stimulus may include an audio signal and/or a video signal. (The video signal may include window operations).

In one embodiment, the secondary sensory stimulus includes a signal to a device that creates a motion, such as a vibration.

### Brief Description of the Figures

Various embodiments of the invention will now be described in detail by way of example only with reference to the following drawings:
FIG. 1 illustrates a computer system in accordance with one embodiment of the present invention.
FIG. 2 illustrates a system for synchronizing sensory stimuli in accordance with one embodiment of the present invention.
FIG. 3 presents a flowchart illustrating the process of synchronizing sensory stimuli in accordance with one embodiment of the present invention.

### Detailed Description

### Computer System

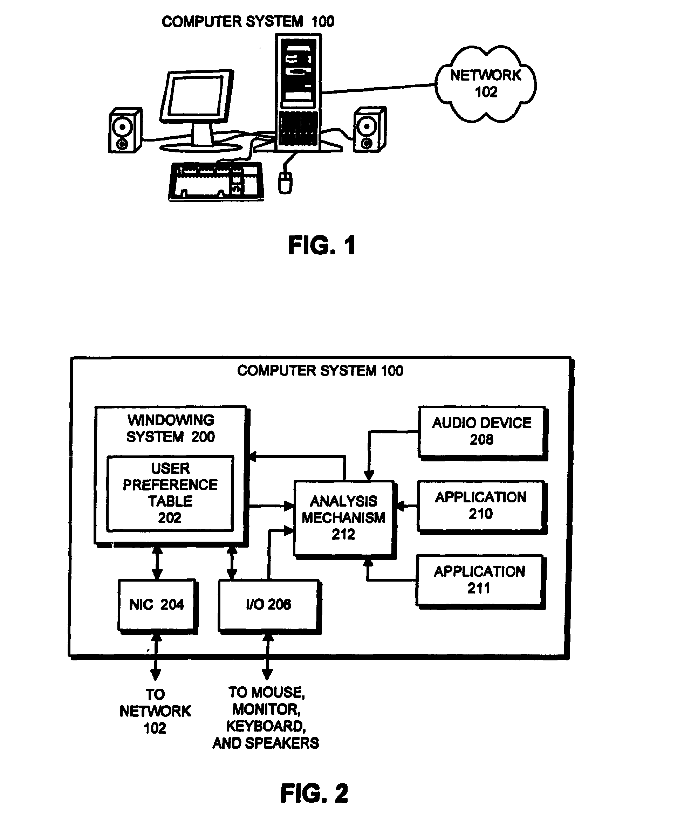

FIG. 1 illustrates computer system 100 in accordance with one embodiment of the present invention. Computer system 100 can generally include any type of computer system, including, but not limited to, a computer system based on a microprocessor, a mainframe computer, a digital signal processor, a portable computing device, a personal organizer, a device controller, and a computational engine within an appliance. Optionally, computer system 100 can contain speakers, and a microphone.

Computer system 100 is coupled to network 102, which enables computer system 100 to communicate with other computer systems. Network 102 can generally include any type of wire or wireless communication channel capable of coupling together computing nodes. This includes, but is not limited to, a local area network, a wide area network, or a combination of networks. In one embodiment of the present invention, network 102 includes the Internet.

### System for Synchronizing Sensory Stimuli

FIG. 2 illustrates a system for synchronizing sensory stimuli in accordance with one embodiment of the present invention. Synchronizing sensory stimuli can include any number of operations. For instance, color palettes for windows can be determined by the music that is playing; windows can be displayed, moved, or redrawn in sync with background music; or location, size, and style of various windows can be determined to be in sync with background music. Computer system 100 contains windowing system 200. Windowing system 200 generates the User Interface (UI) for computer system 100, which contains user preference table 202. User preference table 202 stores the preferences of the user, such as preferred color palettes, musical interests, and visual effects to be used in performing windowing and synchronization operations. User preference table 200 can also contain the names of music files or the names of play lists that the user likes to hear. Windowing system 200 is coupled to network 102 via Network Interface Card (NIC) 204 which is located inside computer system 100. In one embodiment of the present invention, windowing system 200 receives updates via network 102.

Windowing system 200 is additionally coupled to analysis mechanism 212. Analysis mechanism 212 analyzes various sensory stimuli for patterns of events, such as the rhythm or beat of an audio signal or the timing of visual effects, and provides the analysis data to windowing system 200. Analysis mechanism 212 also receives data from audio device 208, applications 210 and 211 - which can include any application capable of executing on computer system 100, and from the mouse and the keyboard through I/O 206. Audio device 208 can include a CD or DVD player, an MP3 player, a microphone, or any other device capable of generating an audio stream. Analysis mechanism 212 additionally receives data from windowing system 200. Windowing system 200 synchronizes the sensory stimuli and sends the data to the appropriate device through I/O 206.

### Process of Synchronizing Sensory Stimuli

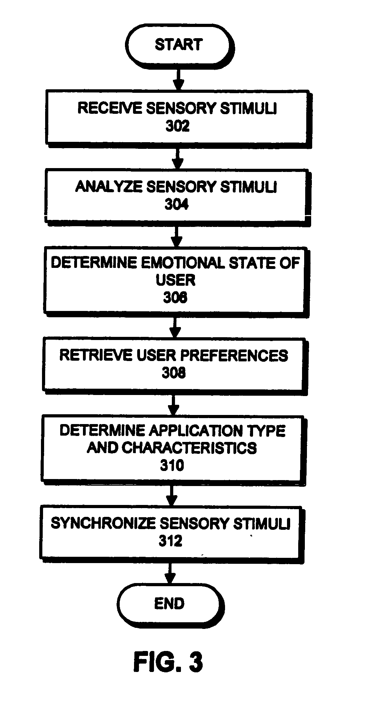

FIG. 3 presents a flowchart illustrating the process of synchronizing sensory stimuli in accordance with one embodiment of the present invention. The system starts by receiving sensory stimuli from various sources (step 302). These sources can include an application running on computer system 100 such as applications 210 and 211, an audio device 208 attached to computer system 100 such as a CD player or an MP3 player, a microphone attached to computer system 100, and windowing system 200. These stimuli can include audio as well as visual effects. Note that any sensory stimulus can be synchronized to any other sensory stimulus. For instance, background music can be synchronized with visual events, such as the opening of windows or the color palette used, or conversely, timing of visual events, such as the opening of windows or the color palette used, can be synchronized with background music.

Upon receiving various sensory stimuli, windowing system 200 analyzes the stimuli for various information (step 304). This information can include a tempo, rhythm, musical code, and atmosphere, as well as certain visual effects or the execution of specific events. This analysis can be accomplished a number of different ways. High-pass and low-pass software filters can be employed to determine a pattern or tempo of drum beats. Various programs exist for extracting musical structure from audio sources. Moreover, if the audio source provides a structured music file format such as MIDI, the music file can be parsed directly. The atmosphere of music can be determined based on the musical chord progression. For example, major chords typically result in a happy or cheerful atmosphere, while minor chords result in a sad or solemn atmosphere. Furthermore, known patterns of chords can result in more specific musical atmospheres. Alternatively, windowing system 200 can determine the atmosphere of the music by looking it up in a database connected to network 102.

In one embodiment of the present invention, the system determines the appropriate atmosphere to create based on the emotional state of the user (step 306). The emotional state of the user can be determined in a number of ways. The system can monitor typing rates and mouse events to determine if the user is a beginner, or if he or she is sleepy or stressed. The system can then make appropriate choices of music types or visual effects based on user preferences for the determined emotional state.

The system retrieves user preferences (step 308) from user preference table 202. These preferences can includes color palettes, types of music, specific titles, and visual effects to use. Note that these preferences can be associated with specific programs. For example, a user might desire to hear a specific type of music while they are browsing the web, while enjoying a completely different type of music while working in a word processing program. To accomplish this, the system determines the application type and its characteristics (step 310). The characteristics of different applications can be determined by the system or they can be retrieved by looking up the application in a database attached to network 102. For example, if the user is working in an office suite, it is reasonable to assume that he or she is performing business related functions. In this situation, the system might decide to play some easy listening or other light music and display a soft color palette. However, if the user is playing a violent video game, the system might choose a vibrant color palette and heavy metal or other rock music.

Once all of the appropriate information has been collected, the system then synchronizes the sensory stimuli (step 312). This can be achieved by a timing control within windowing system 200. For instance, various visual effects, such as the opening of a window, can be put into a queue and then can be initiated by the timing mechanism at the appropriate time. A new window creation function inside of windowing system 200 can complete all of the necessary tasks to create a new window, but the new window creation function will wait until the timing control fires to actually create the window. Likewise, if background music is being generated by windowing system 200, the rhythm of the music can be coordinated by the timing mechanism.

The data structures and code described in this detailed description are typically stored on a computer-readable storage medium, which may be any device or medium that can store code and/or data for use by a computer system. This includes, but is not limited to, magnetic and optical storage devices such as disk drives, magnetic tape, CDs (compact discs) and DVDs (digital versatile discs or digital video discs), and computer instruction signals embodied in a transmission medium (with or without a carrier wave upon which the signals are modulated). For example, the transmission medium may include a communications network, such as the Internet.

The foregoing descriptions of embodiments of the present invention have been presented for purposes of illustration in order to enable a person skilled in the art to appreciate and implement the invention. They are provided in the context of particular applications and their requirements, but are not intended to be exhaustive or to limit the present invention to the forms disclosed. Accordingly, many modifications and variations will be apparent to practitioners skilled in the art, and the scope of the present invention is defined by the appended claims.

## Claims

1. A method for synchronizing sensory stimuli within a user interface (UI) of a computer system, comprising:
receiving a sensory stimulus;
analyzing the sensory stimulus to determine a pattern of events within the sensory stimulus; and
synchronizing a secondary sensory stimulus generated by the UI with the pattern of events.

2. The method of claim 1, wherein the sensory stimulus is an audio signal.

3. The method of claim 2, wherein the audio signal is received from a microphone attached to the computer system.

4. The method of claim 1, wherein the sensory stimulus includes a video signal.

5. The method of claim 4, wherein the video signal includes window operations.

6. The method of any preceding claim, wherein prior to synchronizing the secondary sensory stimulus, the method further involves analyzing activities of a user and using a result of the analysis in synchronizing the secondary sensory stimulus.

7. The method of claim 6, wherein analyzing activities of the user further involves determining what program the user is using.

8. The method of claim 6, wherein analyzing activities of the user further involves analyzing a typing rate of the user.

9. The method of any preceding claim, wherein synchronizing the secondary sensory stimulus further involves considering user preferences in synchronizing the secondary sensory stimulus.

10. The method of claim 1, wherein the secondary sensory stimulus is an audio signal.

11. The method of claim 1, wherein the secondary sensory stimulus includes a video signal.

12. The method of claim 11, wherein the video signal includes window operations.

13. The method of claim 1, wherein the secondary sensory stimulus includes a signal to a device that creates a motion, such as a vibration.

14. An apparatus for synchronizing sensory stimuli within a user interface (UI) of a computer system, comprising:
a receiving mechanism configured to receive a sensory stimulus;
an analysis mechanism configured to analyze the sensory stimulus to determine a pattern of events within the sensory stimulus; and
a synchronization mechanism configured to synchronize a secondary sensory stimulus generated by the UI with the pattern of events.

15. The apparatus of claim 14, wherein the sensory stimulus is an audio signal.

16. The apparatus of claim 15, wherein the receiving mechanism is further configured to receive the audio signal from a microphone attached to the computer system.

17. The apparatus of claim 14, wherein the sensory stimulus includes a video signal.

18. The apparatus of claim 17, wherein the video signal includes window operations.

19. The apparatus of any of claims 14 to 18, wherein the analysis mechanism is further configured to analyzing activities of a user to facilitate synchronizing the secondary sensory stimulus.

20. The apparatus of claim 19, wherein while analyzing activities of the user, the analysis mechanism is configured to determine what program the user is using.

21. The apparatus of claim 19, wherein while analyzing activities of the user, the analysis mechanism is configured to analyze a typing rate of the user.

22. The apparatus of any of claims 14 to 21, wherein the synchronization mechanism is further configured to consider user preferences in synchronizing the secondary sensory stimulus.

23. The apparatus of claim 14, wherein the secondary sensory stimulus is an audio signal.

24. The apparatus of claim 14, wherein the secondary sensory stimulus includes a video signal.

25. The apparatus of claim 24, wherein the video signal includes window operations.

26. The apparatus of claim 14, wherein the secondary sensory stimulus includes a signal to a device that creates a motion, such as a vibration.

27. A computer-readable storage medium storing instructions that when executed by a computer cause the computer to perform a method for synchronizing sensory stimuli within a user interface (UI) of a computer system, the method comprising:
receiving a sensory stimulus;
analyzing the sensory stimulus to determine a pattern of events within the sensory stimulus; and
synchronizing a secondary sensory stimulus generated by the UI with the pattern of events.

28. A computer program containing instructions that when executed by a computer cause the computer to perform the method of any of claims 1 to 13.

29. An operating system including the computer program of claim 28.

30. A means for synchronizing sensory stimuli within a user interface (UI) of a computer system, comprising:
a receiving means for receiving a sensory stimulus;
an analysis means for analyzing the sensory stimulus to determine a pattern of events within the sensory stimulus; and
a synchronization means for synchronizing a secondary sensory stimulus generated by the UI with the pattern of events.
